# EUROPEAN PATENT SPECIFICATION

(11) **EP 3 388 692 B1**
(45) Date of publication and mention of the grant of the patent: **07.08.2019**
(21) Application number: 17382199.2
(22) Date of filing: 12.04.2017
(51) Int. Cl.: F16B 15/08, F16B 15/00, A22C 11/12

(54) **STRIP OF STAPLES**
KLAMMERSTREIFEN
BANDE D'AGRAFES

(43) Date of publication of application: 17.10.2018
(73) Proprietor: Lorenzo Noguera, Sagar, 08302 Mataro (ES)
(72) Inventor: Lorenzo Noguera, Sagar, 08302 Mataro (ES)
(74) Representative: Sugrañes Patentes y Marcas

(56) References cited:
- DE-A1- 3 244 979
- US-A- 5 927 491

## Description

### Application field of the invention

The invention relates to a strip of staples, especially suitable for loading a cured sausage stapler, and a winding of said strip of staples that enables storing the staples and supplying them to the stapler on demand when said winding is assembled to rotate, as a reel, in a supply device.

### Background of the invention

On one hand, the use of generally U-shaped staples for closing twisted ends of bags or tubular sheet packaging is widely known and applied in the cured sausage field, specifically for closing casings filled with meat.

On the other hand, the gathering of individual staples creating a strip of staples, said staples staying temporarily fastened to each other by means of a tape adhered to the staples, is also a technique known for some time in this field for automatizing the supply of staples to the stapling machine. An incipient example is that described in patent GB 985012 dated 1965.

More recently, with the aim of increasing the number of staples in one strip without increasing the necessary space for storage, proposals have been made enabling the winding of the strip around a core assembled to rotate, such as a reel, in a supply apparatus. An example is described in utility model ES 268677. Another example is described in DE 32 44 979 A1.

This winding is only possible if the staples, perfectly juxtaposed and aligned when the strip is in a straight position, have the ability to diverge slightly from one another in order for each one to adopt an essentially radial orientation with respect to the winding core.

If the tape that holds and keeps the staples connected among each other is applied on the outer face of the joining crown between the legs of the staple, it is only necessary that the tape be flexible and have the ability to adopt a curved shape; notwithstanding, when the tape is applied on the inner face of the crown the result is highly unsatisfactory, since in order for the staples to adopt a spread out position from one another it is necessary for the tape to have the ability to extend and the use of materials with elastic properties is incompatible with the benefits that the tape should have, especially because it must be easily cut by shears when the first staple of the strip is separated from said strip. Using materials that cannot be cut cleanly gives rise to, among others, problems derived from irregular cuts that leave tape residues, which can prevent the correct positioning of the next staple to be individualized in the stapler, which will eventually cause some staples to break when the stapler interacts with them, also accelerating the wearing out of the punch that is conventionally used with this type of stapler.

Applying the tape on the inner face of the crown of the staples is however of interest, since it entails, among other advantages, that the portion of tape that accompanies the staple separated from the strip during the stapling operation stays confined between the staple and the casing of the cured sausage held by the staple when it closes around the casing. Later, applying the tape on the inner face of the crown of the staples prevents the tape portions from becoming accidentally detached from the prepared product, which is what happens when the tape is applied on the outer face of the crown of the staples, in other words on the outside of the strip.

Patent document FR 2850637 identifies the aforementioned problem, which arises when the strip has to adopt a curved shape with the legs of the staples facing towards the outside of the center of curvature and the tape is applied on the inner face of the crown of the staples.

The solution proposed by patent FR 2850637 consists of accumulating pleated portions of tape between each two adjacent staples such that it can then be extended without elastic deformation of the tape. This tape goes from adopting a pleated shape between each two adjacent staples to adopting a stretched-out shape when the strip is arranged straightly, tightening the tape, when the strip adopts a curved shape.

In addition to the fact that this solution is not advisable because nothing prevents the staples from separating from each other when the strip adopts a straight shape, which should be avoided in order to ensure the accuracy of the stapler, it turns out that it is only applicable for certain shapes of staples, especially those with crowns having rounded transverse cross sections, typically, staples obtained from cutting a threadlike wire element. Furthermore, the solution is incompatible with moving or dragging the strip by gear, since this would cause the staples of the strip to separate from each other.

The first object of the invention is to present an alternative solution to that proposed by patent document FR 2850637.

It is also an object of the invention to provide a versatile solution, which can be adopted for staples with different profiles or morphologies and not only for staples with circular transverse cross sections or notably rounded outlines.

To date, a train-type formation is preferred for staples obtained from a band-shaped material, which gives rise to staples with a markedly rectangular transverse cross section, and in which the staples are connected to one another without interruption, the material they are made of needing to be cut in order to separate one staple from the train of staples. An example is disclosed in patent EP1845026, which describes the formation of a train of staples from a band or wire-shaped material, in order to close tube or bag-shaped packaging wherein along the band or wire-shaped material an essentially wave-shaped profile is stamped, forming successive U's, each of which constitutes the body of a staple.

The marked rectangular transverse cross section of the crown joining the legs of each staple would provide an eventual strip of staples, the staples being arranged adjacently instead of being linked together, from flat and regular outer support surface not too optimal for curving said strip. In addition, the juxtaposition of the staples would also leave space between each two consecutive crowns to accumulate tape, as it was possible when the crowns had a circular transverse cross section or similar. Likewise, the flat and regular outer contact surface is a drawback when using dragging systems, for supplying staples, by gear.

This strip arrangement could however be advantageous with respect to the train formation. An important advantage is that the need to cut the material from which the staples are formed each time a staple is to be separated from the train of staples would disappear, an operation which currently generates dust, for example, metal dust when the band is made of aluminum, which represents a serious threat when food is being handled, due to the risk involved if the dust is deposited on the food material.

A solution is therefore of interest that is applicable for strips made of staples with marked rectangular transverse cross sections.

### Description of the invention

The strip of staples object of the invention is a strip comprising a succession of staples configured in a general U-shape, juxtaposed and connected among themselves in a separable manner by means of a flexible fastening element or means, each staple having two opposing legs and between said legs a connecting crown on the inner face of which, that is, between the legs, said fastening element or means is extended.

Essentially, the strip is characterized in that the width of the staples is reduced in the crown and in a linking portion of the legs with said crown enabling the staples to adopt slightly spread out positions from each other, without preventing each staple from supporting itself on its legs with the staple immediately before and after it in the strip, the crowns of said staples moving towards each together and consequently loosening the fastening element or means between the staples, endowing the strip with the ability to adopt a curved shape, suitable for winding the strip around the core of a reel with the legs directed towards the outside of said reel.

Advantageously, the reduction in the width of the crown and in the linking portion of the legs with the crown allows for the fastening element or means to be arranged in an area of the strip that contracts when it adopts a curved shape with the legs facing away from the center of curvature. Consequently, since this fastening element or means is flexible it does not resist the strip, adopting the curved shape. Also, the strip having a straight shape, the separation between crowns, caused by the reduction in width in this part of the staples, makes it possible for the strip to move or be dragged by the gear, as will be explained in greater detail below, even if the transverse cross section of the crowns is not circular or rounded.

In an embodiment, an end portion is distinguished in the legs, through the front and back edges of which each staple can support itself in a stable manner on the staples immediately in front of and behind it, respectively, in the strip when it adopts a straight position; and the connecting linking portion between the end portion and the crown, of reduced width (h) with respect to the width (H) of said end portion, giving rise to a transition between the end and linking portions of the legs, which can be without interruption or staggered.

While the linking portion of the legs with the crown can have constant width (h), the invention also provides that the linking portion of the legs to the crown have decreasing width (h), meaning that it gets narrower towards the crown. Thus, the linking portion may gradually be narrowed, giving rise to straight front and/or back edges, or it can follow convex or curved convex reduction curves.

In a variant of interest, the staples are symmetrical with respect to a plane of symmetry (BB) transverse to the strip, which divides them into two equal halves, although the invention also contemplates that this is not so and that the reduction in width does not follow equal profiles in the front and back edges of the legs or that only one of said edges is withdrawn towards the aforementioned cutting plane (BB).

In a variant, the entire end portion of the legs has a constant width (H).

The width of the crown of the staples can also be decreasing, narrowing as it moves away from the legs.

The ratio of the area with the smaller width (h) of the staples (2) with respect to the portion with the greater width (H), located in the end portion of the legs may vary, even though it has been found that satisfactory results are already obtained when this relation follows the expression H/h >= 1.2.

According to an embodiment of the invention, the crown and the linking portions of each leg with the crown provide a contact surface for the fastening element or means wherein a central flat area, providing a crown, and two curved areas on each side of the central area, provided by the linking portions of the legs, are distinguished.

The fastening element or means can be extended past the crown. In a variant, the fastening element or means extends over said central area in each staple and through at least part of the curved areas of the linking portions on each side of the crown without going past them.

In any event, it is of interest so that the fastening element or means does not prevent the strip from taking its curved shape and that said fastening element or means does not exceed the transition between the end and linking portions of the legs in the staples.

The fastening element or means can be a tape extending longitudinally to the strip adhered to the staples.

The staples, according to a variant of interest, have an oblong transverse cross section, the width or dimension of which, in the direction of extension of the strip, is greater than its thickness or dimension in the normal direction of extension of the strip.

Preferably, among the possible oblong transverse cross section shapes, the staples have a marked rectangular transverse cross section.

Another aspect of the invention is a winding of a strip according to any one of the variants of the invention around a hollow core of a reel device, with the legs of the staples facing opposite said core.

### Brief description of the drawings

Figure 1 schematically shows a strip of staples, according to a longitudinal cutting plane, which adopts a solution belonging to the state of the art;
Figure 2 illustrates one of the drawbacks of the solution shown in Figure 1;
Figures 3a, 3b and 3c show a staple from a strip according to a variant of the invention, from a perspective in plan, front and according to cutting plane AA, respectively;
Figure 4 is a schematic front view of a strip according to a variant of the invention, formed by juxtaposition and fastening by means of a tape having multiple staple adhesive properties, such as the one shown in Figures 3a, 3b and 3c;
Figure 5 is a schematic view according to cutting plane AA of the strip in Figure 4 when it takes on a straight shape;
Figure 6 illustrates the effect produced in the mentioned tape when the strip in Figure 5 adopts a curved shape;
Figures 7, 8 and 9 show further alternatives for a staple suitable for the implementation of the invention;
Figure 10 shows another strip according to the invention in longitudinal cross section, made up, in this case, of non-symmetrical staples;
Figures 11 and 12 show the capacity of a strip of staples, such as that shown in Figures 4 and 5 for winding around the core of a reel for storage; and
Figure 13 schematically shows other possible configurations for the legs of a staple suitable for the implementation of the invention, as far as its transverse cross section is concerned.

### Detailed description of the invention

An object of the present invention is to be able to form a strip of individual staples temporarily fastened by a fastening element or means, the staples being generally U-shaped, distinguishing two opposing legs and a connecting crown between said legs, said fastening element or means being extended along the strip over the crown of the staples, specifically on the inner face of the crown, and all of this allowing the strip to adopt a curved shape without giving up the high precision required to feed the staples one by one into a stapler.

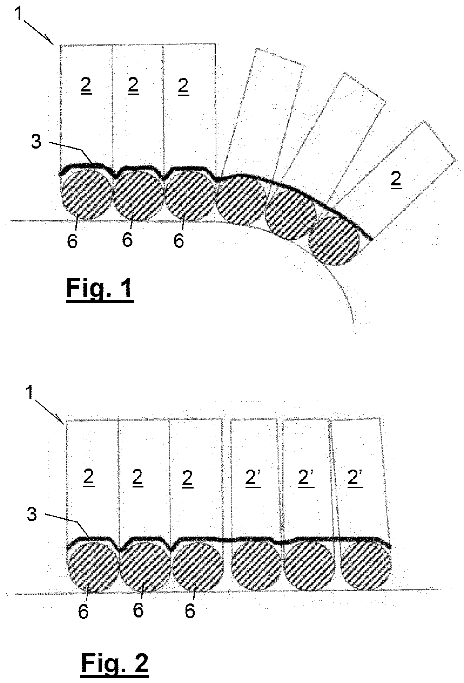

Figure 1 schematically shows a strip of staples, according to a longitudinal cutting plane, which adopts a solution belonging to the state of the art. Since the fastening element or means is a tape 3 adhered to the staples 2 on the inner face of the crowns 6 of said staples, the proposed solution essentially consists of accumulating some of the tape 3 between each two adjacent staples, pleated, such that its extension is possible, without elastic deformation of the tape, when the strip adopts a curved shape.

In addition to the difficulty of this construction, particularly for pleating the tape 3 in the small spaces formed between each two adjacent staples 2 and the impossibility of producing these pleats when the tape 3 is thick, Figure 2 shows other disadvantages associated with this solution, namely the loss of parallelism or the spacing between staples (see the staples 2'), which may occur during transport or when feeding the stapler, seriously affecting the precision of the stapling operation.

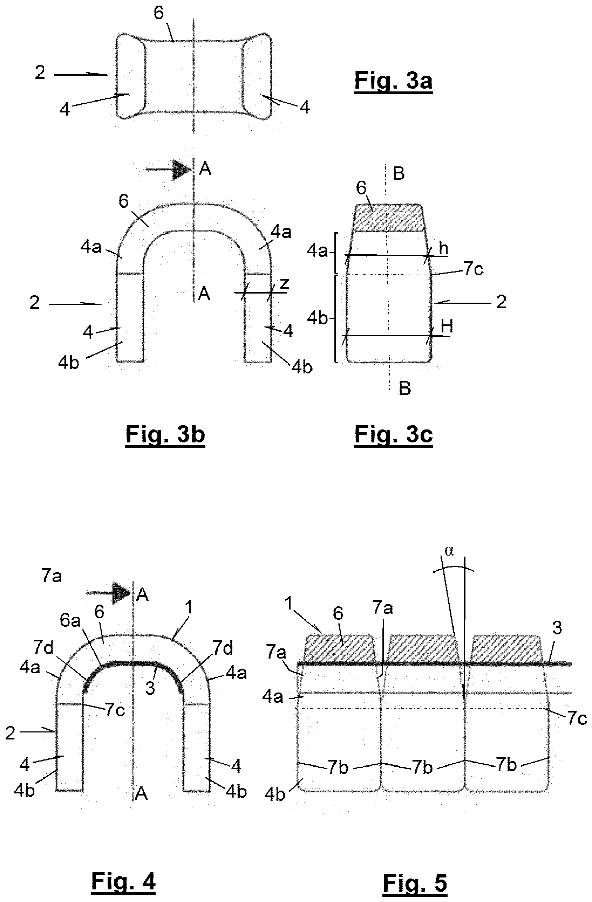

Figures 3a, 3b and 3c show a staple 2 suitable for forming a strip that resolves the disadvantages highlighted above.

This staple 2 is made up of metallic material in the shape of a band, which gives the staple 2 an oblong transverse cross section, in other words, with a width dimension that, although variable, is always greater than its thickness dimension. In the drawings, the width dimensions are identified, depending on the portion of the staple 2 to which we are referring, as H or h; and the thickness dimension is identified as z, it being able to vary along the staple 2.

Conventionally, the staple 2 comprises two opposing legs 4 and a connecting crown 6, or cross bridge, between said legs 4. However, it should be noted that an end portion 4b is distinguished in the legs 4, in this example of constant width H; and a linking portion 4a, connecting the end portion 4b and the crown 6, with reduced width h with respect to the width H of said end portion 4b.

The reduction in width in the legs 4 gives rise to a transition 7c between the end portions 4b and linking portions 4a, which is a bearing point around which two juxtaposed staples 2, while still abutting one against the other, will be able to tilt with their respective crowns 6 coming closer together in order to adopt a slightly spread out position.

As Figures 4, 5 and 6 illustrate, by sufficiently separating this transition point 7c from the crown 6, it is possible to arrange the fastening element or means 3, where appropriate, a tape with adhesive properties, on the inner face of said crown 6 so as to provide its fastening function between staples 2 of one strip 1 but without extending over the mentioned transition point 7c. Consequently, the tilting movement between the two staples 2, in the approaching position of their crowns 6, is not prevented by the fastening element or means 3 because instead of being extended it is loosened.

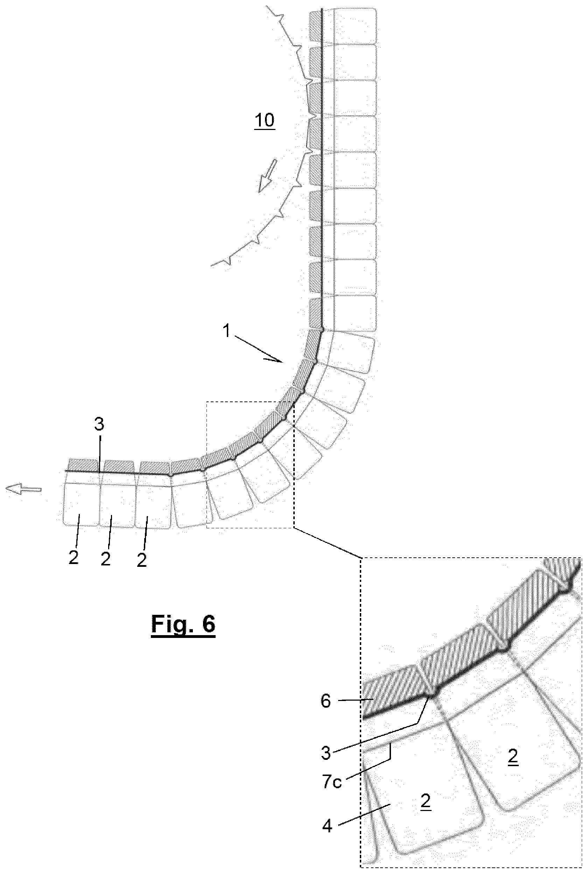

This effect is illustrated in Figure 6, which shows a strip 1 as described above adopting a curved shape, such as one that could be adopted by a strip 1 with the same characteristics when fed into a cured sausage stapler or when wound around a core of a staple supply reel.

In addition to an enlarged view of the loosening of the fastening element or means 3 when the strip 1 is curved due to the coming together of the crowns 6 between each two consecutive staples 2 in the strip, Figure 6 also shows how the spacing between the crowns 6 when the strip 1 adopts a straight shape makes the strip 1 suitable for being driven or drawn towards the stapler through a gear, despite the fact that the outer faces of said crowns 6 are flat. In this case, the dragging or feeding device has been represented in the form of a generic cogwheel 10.

In the example in Figures 3a to 3c and 4 to 6, the end portion 4b of the legs 4 of the staples has a constant width H, determining front and back edges 7b (see Figure 5) in each staple 2, suitable for the staple to support itself in a stable manner on the staples immediately in front and behind it in the strip 1, contributing so that said strip 1 adopts a straight shape without warping towards a center of curvature arranged on the side of the legs 4, while the width of the linking portion 4a of the legs 4 is not constant. In these examples, the linking portion 4a of the legs 4 with the crown 6 has a decreasing width h and tapers linearly towards the crown 6. This reduction results in inclined front and back edges 7a (see Figure 5), that can be flat or not, which extend further along the crown 6, the width reduction of which follows the same linearity as in the linking portions 4a of the legs 4.

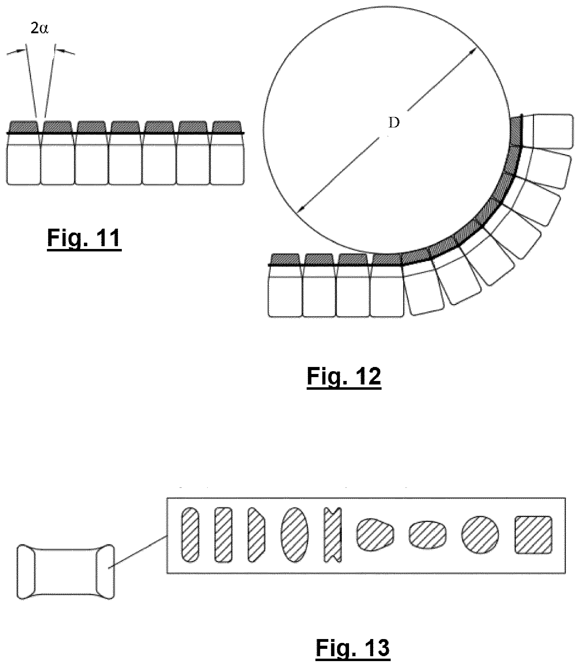

By adopting the configuration illustrated in Figures 3a to 3c and 4 to 6, selecting a dimension H of 4.9 mm, a dimension z of 1.5 mm, and the inclination of the angle being α (see Figure 5) forming the edges of the linking portions of the legs with that of the end portions of approximately 8°, a strip 1 is achieved, perfectly suitable for being wrapped around a core with a diameter D of 35 mm, all of this as shown in Figures 11 and 12.

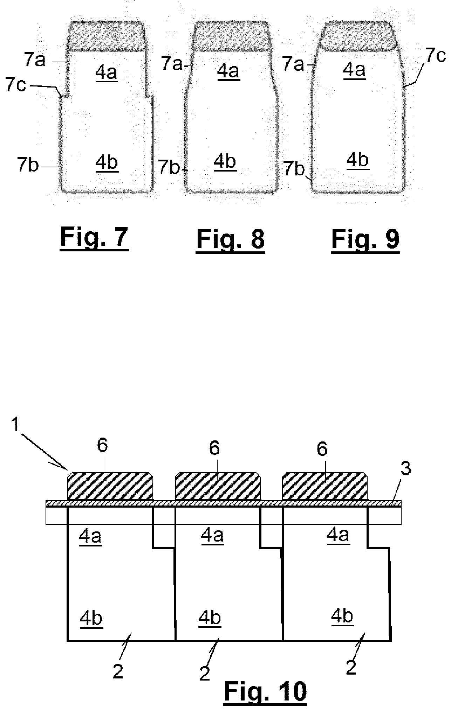

Although in this example the staples 2 are symmetrical with respect to a cutting plane (BB) transverse to the strip 1, and therefore the width reduction in the linking portions 4a and in the crown 6, with respect to the width H of the end portion 4a of the legs 4, is distributed on both sides of the staple 2, the invention provides that this is not necessarily the case, and therefore the use of non-symmetrical staples 2 is contemplated as shown in Figure 10.

The invention also contemplates other alternatives, for example, those illustrated in Figures 7, 8 and 9 that show a cross-sectional view of several staples 2.

In all the cases shown in Figures 7, 8 and 9, the width H of the end portion 4b of the legs 4 is constant and the staples 2 are differentiated in that the width h of the linking portion 4a of these legs 4 as well as that of the crown 6 is reduced.

In the example shown in Figure 7, the transition 7c between the end portions 4b and the linking portions 4a of the legs 4 takes a staggered shape, which results in a marked discontinuity in the front and back edges of the staple 2, the width h of the linking portion 4a of the legs being essentially constant, while in the examples shown in Figures 8 and 9, this transition 7c is not as abrupt, the width h of the linking portion 4a of the legs 4 gradually decreasing towards the crown 6. In the case of Figure 8, the width reduction h in the linking portions 4a of the legs 4 gives rise to concave curved front and back edges 7a, seen with the legs 4 pointing downwards; and in the case of Figure 9, the width reduction h in the linking portions 4a of the legs 4 gives rise to convex curved front and back edges 7a, seen with the legs 4 pointing downwards. It should be noted that in this latter case the convex curved shape is tangent in the transition 7c with the straight shape that the front and back edges 7b of the end portions 4b of the legs 4 have, which can contribute to protecting the cured sausage casing. Indeed, it may be of interest when the staples 2 are intended to work on very thin casings, bags or sheets or on delicate materials, stripping the front and back edges of the staples, specifically at the transition 7c, of any vertex that could cause the beginning of a tear-off point of said material.

In any case, the front profile of the staples may be analogous to that shown in Figure 3b and the arrangement of the fastening element or means analogous to that shown in Figure 4, wherein the crown 6 and the linking portions 4a of each leg 4 with the crown 6 provide a contact surface for the fastening element or means 3, wherein a central flat area 6a is distinguished, provided in crown 6, and two curved areas 7d on both sides of the central area provided by the linking portions 4a of the legs 4.

It should be noted that the fastening element or means 3 is selected such that it extends in each staple 2 over said central area 6a and through the curved areas 7d of the linking portions 4a on each side of the crown 6, but without going past them, that is, without reaching the transition 7c between the end portions 4b and linking portions 4a of the legs 4.

The invention is compatible with the use of known fastening elements or means 3, for example, those made up of a band or tape comprising a support layer and a thermoadhesive layer, which is adhered to the staples by heat input.

Figure 13 schematically illustrates other possible shapes for the staples 2 of a strip according to the invention, specifically, alternative shapes for their legs, as far as their transverse cross section is concerned. It should be noted that not only oblong transverse cross sections are contemplated, but that the invention can also be implemented with staples, the legs of which have, in transverse cross section, rounded or quadrangular outlines.

## Claims

1. A strip (1) of staples, comprising a succession of staples (2) configured in a general U-shape, juxtaposed and connected among themselves in a separable manner by means of a flexible fastening element or means (3), each staple having two opposing legs (4) and between said legs a connecting crown (6) on whose inner face, that is, between the legs, (4) said fastening element or means (3) is extended, the strip (1) being **characterized in that** the width of the staples is reduced in the crown (6) and in a linking portion (4a) of the legs (4) with said crown (6) enabling the staples to adopt slightly spread out positions from each other, without preventing each staple from supporting itself on its legs with the staple immediately before and after it in the strip, the crowns (6) of said staples moving towards each other and consequently loosening the fastening element or means (3) between the staples, endowing the strip (1) with the ability to adopt a curved shape, suitable for winding the strip around the core of a reel with the legs directed towards the outside of said reel.

2. The strip (1) according to claim 1, **characterized in that** in the legs (4) the following can be distinguished:
- an end portion (4b), in the front and back edges (7b) of which each staple (2) can support itself in a stable manner on the staples immediately in front of and behind it, respectively, in the strip (1) when it adopts a straight position, and
- the linking portion (4a) between the end portion (4b) and the crown (6), with a reduced width (h) with respect to the width (H) of said end portion, giving rise to a transition (7c) between the end and linking portions of the legs, which may be without interruption or staggered.

3. The strip (1) according to any one of claims 1 or 2, **characterized in that** the linking portion (4a) of the legs (4) with the crown (6) has a constant width (h).

4. The strip (1) according to any one of claims 1 or 2, **characterized in that** the linking portion (4a) of the legs (4) with the crown (6) has a decreasing width (h), that is, it gets narrower towards the crown.

5. The strip (1) according to claim 4, **characterized in that** the front and back edges (7a) of each staple (2) in the linking portions (4a) are not flat.

6. The strip (1) according to claim 5, **characterized in that** the staples (2) are symmetrical with respect to a plane of symmetry (BB) transverse to the strip (1), which divides them into two equal halves, and **in that** the front and back edges (7a) of each staple, on each side of the cutting plane, in the linking portions (4a) of its legs (4) are convexly curved seen with the legs (4) pointing downwards.

7. The strip (1) according to claim 5, **characterized in that** the staples (2) are symmetrical with respect to a plane of symmetry (BB) transverse to the strip (1), which divides them into two equal halves, and **in that** the front and back edges (7a) of each staple, on each side of the cutting plane, in the linking portions (4a) of its legs (4) are concave curved seen with the legs (4) pointing downwards.

8. The strip (1) according to any one of claims 2 to 7, **characterized in that** the end portion (4b) of the legs (4) has a constant width (H).

9. The strip (1) according to any one of the preceding claims, **characterized in that** the width of the crown (6) is decreasing, it gets narrower as it moves away from the legs (4).

10. The strip (1) according to any one of the preceding claims, **characterized in that** the ratio of the area with the smaller width (h) of the staples (2) with respect to the portion with the greater width (H) follows the expression H/h >= 1.2.

11. The strip (1) according to any one of the preceding claims, **characterized in that** the crown (6) and the linking portions (4a) of each leg (4) with the crown (6) provide a contact surface for the fastening element or means (3) wherein a central flat area (6a), provided in the crown (6), and two curved areas (7d) on both sides of the central area, provided by the linking portions (4a) of the legs (4), are distinguished.

12. The strip (1) according to the preceding claim, **characterized in that** the fastening element or means (3) extends over said central area (6a) in each staple (2) and through at least part of the curved areas (7d) of the linking portions (4a) on each side of the crown (6) without going past them.

13. The strip (1) according to any one of claims 2 to 11, **characterized in that** the fastening element or means (3) does exceed the transition (7c) between the end and linking portions (4a, 4b) of the legs (4) in the staples (2).

14. The strip (1) according to any one of the preceding claims, **characterized in that** the fastening element or means (3) is a tape extending longitudinally to the strip (1) adhered to the staples (2).

15. The strip (1) according to any one of the preceding claims, **characterized in that** the staples (2) have an oblong transverse cross section, the width or dimension of which in the direction of extension of the strip is greater than its thickness or dimension in the normal direction of extension of the strip.

16. The strip (1) according to the preceding claim, **characterized in that** the staples (2) have a marked rectangular transverse cross section.

17. A winding of a strip (1) according to any one of the preceding claims around a hollow core of a reel device, with the legs (4) of the staples facing opposite said core.

## Patentansprüche

1. Streifen (1) aus Klammern, umfassend eine Reihenfolge von in einer generellen U-Form ausgebildeten Klammern (2), welche nebeneinandergestellt und untereinander lösbar mittels eines flexiblen Befestigungselements oder -mittels (3) verbunden sind, wobei jede Klammer zwei gegenüberliegende Beine (4) und zwischen den genannten Beinen einen Verbindungskrone (6) aufweist, wobei sich auf deren innere Fläche, i.e., zwischen den Beinen (4), das genannte Befestigungselement oder -mittel (3) erstreckt, wobei der Streifen (1) **dadurch gekennzeichnet ist, dass** die Breite der Klammern in der Krone (6) und in einem Kopplungsteil (4a) der Beine (4) verringert ist, wobei die genannte Krone (6) ermöglicht, dass die Klammern leicht gespreizte Stellungen voneinander einnehmen, ohne zu verhindern, dass sich jede Klammer selber auf deren Beinen mit der Klammer unmittelbar davor und dahinter im Streifen stützt, wobei sich die Kronen (6) der genannten Klammern zueinander bewegen und somit das Befestigungselement oder -mittel (3) zwischen den Klammern lockern, so dass dem Streifen (1) die Fähigkeit verliehen wird, eine gekrümmte Form einzunehmen, welche dazu geeignet ist, den Streifen um den Kern einer Spule herum zu wickeln, mit den Beinen zur Außenseite der genannten Spule gerichtet.

2. Streifen (1) nach Anspruch 1, **dadurch gekennzeichnet, dass** in den Beinen (4) Folgendes unterschieden werden kann:
- einen Endteil (4b), in dessen vorderen und hinteren Rändern (7b) sich jede Klammer (2) selber stabil auf den Klammern jeweils unmittelbar davor und dahinter im Streifen (1), wenn er eine gerade Stellung einnimmt, stützten kann, und
- den Kopplungsteil (4a) zwischen dem Endteil (4b) und der Krone (6), mit einer verringerten Breite (h) in Bezug auf die Breite (H) des genannten Endteils, so dass ein Übergang (7c) zwischen den End- und Kopplungsteilen der Beine gebildet wird, welcher ohne Unterbrechung oder abgestuft sein kann.

3. Streifen (1) nach einem der Ansprüche 1 oder 2, **dadurch gekennzeichnet, dass** der Kopplungsteil (4a) der Beine (4) mit der Krone (6) eine konstante Breite (h) aufweist.

4. Streifen (1) nach einem der Ansprüche 1 oder 2, **dadurch gekennzeichnet, dass** der Kopplungsteil (4a) der Beine (4) mit der Krone (6) eine abnehmende Breite (h) aufweist, i.e., er wird schmaler zur Krone hin.

5. Streifen (1) nach Anspruch 4, **dadurch gekennzeichnet, dass** die vorderen und hinteren Ränder (7a) jeder Klammer (2) in den Kopplungsteilen (4a) nicht flach sind.

6. Streifen (1) nach Anspruch 5, **dadurch gekennzeichnet, dass** die Klammern (2) in Bezug auf eine Symmetrieebene (BB) quer zum Streifen (1) symmetrisch sind, welche sie in zwei gleichen Hälften teilt, und dass die vorderen und hinteren Ränder (7a) jeder Klammer, auf jeder Seite der Schnittebene, in den Kopplungsteilen (4a) deren Beinen (4) konvex gekrümmt sind, mit den Beinen (4) nach unten zeigend gesehen.

7. Streifen (1) nach Anspruch 5, **dadurch gekennzeichnet, dass** die Klammern (2) in Bezug auf eine Symmetrieebene (BB) quer zum Streifen (1) symmetrisch sind, welche sie in zwei gleichen Hälften teilt, und dass die vorderen und hinteren Ränder (7a) jeder Klammer, auf jeder Seite der Schnittebene, in den Kopplungsteilen (4a) deren Beinen (4) konkav gekrümmt sind, mit den Beinen (4) nach unten zeigend gesehen.

8. Streifen (1) nach einem der Ansprüche 2 bis 7, **dadurch gekennzeichnet, dass** der Endteil (4b) der Beine (4) eine konstante Breite (H) aufweist.

9. Streifen (1) nach einem der vorhergehenden Ansprüche, **dadurch gekennzeichnet, dass** die Breite der Krone (6) abnimmt, sie wird schmaler wenn sie sich von den Beinen (4) entfernt.

10. Streifen (1) nach einem der vorhergehenden Ansprüche, **dadurch gekennzeichnet, dass** das Verhältnis des Bereiches mit der kleineren Breite (h) der Klammern (2) in Bezug auf den Teil mit der größeren Breite (H) den Ausdruck H/h >= 1,2 folgt.

11. Streifen (1) nach einem der vorhergehenden Ansprüche, **dadurch gekennzeichnet, dass** die Krone (6) und die Kopplungsteile (4a) jedes Beines (4) mit der Krone (6) eine Kontaktfläche für das Befestigungselement oder -mittel (3) bereitstellen, wobei ein flacher Zentralbereich (6a), welcher in der Krone (6) bereitgestellt wird, und zwei gekrümmte Bereiche (7d) auf beiden Seiten des Zentralbereiches, welche von den Kopplungsteilen (4a) der Beine (4) bereitgestellt werden, unterschieden werden.

12. Streifen (1) nach dem vorhergehenden Anspruch, **dadurch gekennzeichnet, dass** sich das Befestigungselement oder -mittel (3) über dem genannten Zentralbereich (6a) in jeder Klammer (2) und durch mindestens einen Teil der gekrümmten Bereiche (7d) der Kopplungsteile (4a) auf jeder Seite der Krone (6) erstreckt, ohne über sie hinaus zu gehen.

13. Streifen (1) nach einem der Ansprüche 2 bis 11, **dadurch gekennzeichnet, dass** das Befestigungselement oder -mittel (3) den Übergang (7c) zwischen den End- und Kopplungsteilen (4a, 4b) der Beine (4) in den Klammern (2) überschreitet.

14. Streifen (1) nach einem der vorhergehenden Ansprüche, **dadurch gekennzeichnet, dass** das Befestigungselement oder -mittel (3) ein Band ist, welches sich längs des Streifens (1) an den Klammern (2) angehaftet erstreckt.

15. Streifen (1) nach einem der vorhergehenden Ansprüche, **dadurch gekennzeichnet, dass** die Klammern (2) einen länglichen Querschnitt aufweisen, dessen Breite oder Abmessung in der Richtung der Erstreckung des Streifens größer als dessen Dicke oder Abmessung in der normalen Erstreckungsrichtung des Streifens ist.

16. Streifen (1) nach dem vorhergehenden Anspruch, **dadurch gekennzeichnet, dass** die Klammern (2) einen deutlichen rechteckigen Querschnitt aufweisen.

17. Aufwicklung eines Streifens (1) nach einem der vorhergehenden Ansprüche um einen hohlen Kern einer Spulenvorrichtung herum, mit den Beinen (4) der Klammern dem genannten Kern gegenüberliegend zugewandt.

## Revendications

1. Bande (1) d'agrafes, comprenant une suite d'agrafes (2) configurées dans une forme générale de U, juxtaposées et connectées entre elles d'une manière séparable par le biais d'un élément ou un moyen de fixation flexible (3), chaque agrafe ayant deux pattes opposées (4) et entre lesdites pattes une couronne de connexion (6) sur la face de la quelle, c'est-à-dire, entre les pattes, (4) ledit élément ou moyen de fixation (3) est étendu, la bande (1) étant **caractérisée en ce que** la largeur des agrafes est réduite dans la couronne (6) et dans une partie de liaison (4a) des pattes (4) avec ladite couronne (6) permettant que les agrafes adoptent des positions légèrement déployées les unes des autres, sans éviter que chaque agrafe soit supportée sur ses propres pattes avec l'agrafe immédiatement précédente et postérieure dans la bande, les couronnes (6) desdites agrafes se déplaçant l'une vers l'autre et par conséquent détachant l'élément ou moyen de fixation (3) entre les agrafes, accordant à la bande (1) la capacité d'adopter une forme courbée, appropriée pour bobiner la bande autour du noyau d'une bobine avec les pattes orientées vers l'extérieur de ladite bobine.

2. Bande (1) selon la revendication 1, **caractérisée en ce que** dans les pattes (4) on peut distinguer ce qui suit:
- une partie terminale (4b), dans les bords avant et arrière (7b) de laquelle chaque agrafe (2) peut se supporter elle-même d'une manière stable sur les agrafes immédiatement en face et derrière elle, respectivement, dans la bande (1) lorsqu'elle adopte une position droite, et
- la partie de liaison (4a) entre la partie terminale (4b) et la couronne (6), avec une largeur réduite (h) par rapport à la largeur (H) de ladite partie terminale, produisant une transition (7c) entre les parties terminales et de liaison des pattes, qui peut être sans interruption ou échelonné.

3. Bande (1) selon l'une quelconque des revendications 1 ou 2, **caractérisée en ce que** la partie de liaison (4a) des pattes (4) avec la couronne (6) a une largeur constante (h).

4. Bande (1) selon l'une quelconque des revendications 1 ou 2, **caractérisée en ce que** la partie de liaison (4a) des pattes (4) avec la couronne (6) a une largeur décroissante (h), c'est-à-dire, qui se rapproche vers la couronne.

5. Bande (1) selon la revendication 4, **caractérisée en ce que** les bords avant et arrière (7a) de chaque agrafe (2) dans les parties de liaison (4a) ne sont pas plates.

6. Bande (1) selon la revendication 5, **caractérisée en ce que** les agrafes (2) sont symétriques par rapport à un plan de symétrie (BB) transversal à la bande (1), qui les divise en deux moitiés identiques, et **en ce que** les bords avant et arrière (7a) de chaque agrafe, de chaque côté du plan de coupe, dans les parties de liaison (4a) de ses pattes (4) sont courbés de manière convexe vus avec les pattes (4) orientées vers le bas.

7. Bande (1) selon la revendication 5, **caractérisée en ce que** les agrafes (2) sont symétriques par rapport à un plan de symétrie (BB) transversale à la bande (1), qui les divise en deux moitiés identiques, et **en ce que** les bords avant et arrière (7a) de chaque agrafe, de chaque côté du plan de coupe, dans les parties de liaison (4a) de ses pattes (4) sont courbés de manière concave vus avec les pattes (4) orientées vers le bas.

8. Bande (1) selon l'une quelconque des revendications 2 à 7, **caractérisée en ce que** la partie terminale (4b) des pattes a une largeur constante (H).

9. Bande (1) selon l'une quelconque des revendications précédentes, **caractérisée en ce que** la largeur de la couronne (6) est décroissante, elle rétrécit à mesure qu'elle s'éloigne des pattes (4).

10. Bande (1) selon l'une quelconque des revendications précédentes, **caractérisée en ce que** le rapport de la zone avec la largeur inférieure (h) des agrafes (2) par rapport à la partie avec la largeur supérieure (H) suit l'expression H/h≥1,2.

11. Bande (1) selon l'une quelconque des revendications précédentes, **caractérisée en ce que** la couronne (6) et les parties de liaison (4a) de chaque patte (4) avec la couronne (6) fournit une surface de contact pour l'élément ou moyen de fixation (3) dans laquelle on distingue une zone centrale plate (6a), prévue dans la couronne (6), et deux zones courbées (7d) des deux côtés de la zone centrale, pourvues par les partie de liaison (4a) des pattes (4).

12. Bande (1) selon la revendication précédente, **caractérisée en ce que** l'élément ou moyen de fixation (3) s'étend sur ladite zone centrale (6a) dans chaque agrafe (2) et à travers au moins une partie des zones courbées (7d) des parties de liaison (4a) de chaque côté des couronnes (6) sans aller au-delà de celles-ci.

13. Bande (1) selon l'une quelconque des revendications 2 à 11, **caractérisée en ce que** l'élément ou moyen de fixation (4) ne dépasse pas la transition (7c) entre les parties terminale et de liaison (4a, 4b) des pattes (4) dans les agrafes (2).

14. Bande (1) selon l'une quelconque des revendications précédentes, **caractérisée en ce que** l'élément ou moyen de fixation (3) est un ruban s'étendant longitudinalement vers la bande (1) adhéré aux agrafes (2).

15. Bande (1) selon l'une quelconque des revendications précédentes, **caractérisée en ce que** les agrafes (2) ont une section transversale oblongue, dont la largeur ou la dimension dans la direction de l'extension de la bande est supérieure à l'épaisseur ou dimension dans la direction normale de l'extension de la bande.

16. Bande (1) selon la revendication précédente, **caractérisée en ce que** les agrafes (2) ont une section transversale rectangulaire prononcée.

17. Bobinage d'une bande (1) selon l'une quelconque des revendications précédentes autour d'un noyau creux d'un dispositif de bobine, avec les pattes (4) des agrafes étant en regard dudit noyau.
